# FASCICULE DE BREVET EUROPEEN

(11) **EP 0 751 024 B1**
(45) Date de publication et mention de la délivrance du brevet: **19.05.1999**
(21) Numéro de dépôt: 96500088.8
(22) Date de dépôt: 26.06.1996
(51) Int. Cl.: B60K 15/04

(54) **Procédé de fabrication de tubes de remplissage de réservoirs à combustible**
Verfahren zur Herstellung von Einfüllstutzen für Brennstofftanks
Method for producing filler pipes for fuel tanks

(30) Priorité: 26.06.1995 ES 9501274
(43) Date de publication de la demande: 02.01.1997
(73) Titulaire: Walbro Automotive, SA, 31195 Berrioplano (Navarra) (ES)
(72) Inventeur: Artoleta Gembero, José Manuel, 31195 Berrioplano, Navarra (ES)
(74) Mandataire: Manresa Val, Manuel

(56) Documents cités:
- EP-A- 0 206 874
- EP-A- 0 245 613
- EP-A- 0 437 053
- EP-A- 0 464 420
- EP-A- 0 581 632
- EP-A- 0 636 505
- DE-A- 4 023 094
- US-A- 4 610 284
- US-A- 4 946 060
- US-A- 5 111 858
- US-A- 5 322 100

## Description

La présente invention se rapporte à un procédé pour la fabrication de tubes de remplissage de réservoirs à combustible à partir duquel découlent d'importants avantages au niveau constructif et fonctionnels par rapport aux procédés similaires à l'état de la technique.

Lesdits tubes de remplissage comportent généralement un corps tubulaire avec une extrémité supérieure qui communique avec l'atmosphère et sur laquelle est accouplée une pièce d'entrée qui intègre un bouchon de fermeture étanche, amovible, et des éléments valvulaires auxiliaires, et une extrémité inférieure accouplée par ajustage par emboîtement, hermétiquement, à l'entrée de remplissage du réservoir, dont le corps tubulaire maintient solidairement des conduits pour l'aération et la dégazéification dudit réservoir, sur lesquels s'emboîtent des tubes flexibles en provenance du réservoir.

Ladite extrémité inférieure du corps tubulaire intégrant le tube de remplissage, inclue en général un dispositif de clapet anti-retour.

Des tubes de remplissage de ce type, au travers desquels est canalisé le fluide à l'intérieur desdits réservoirs, sont décrits dans les brevets FR-A-2583353, DE-A-40 23 094, EP-A-0245613, US-A-4946060, US-A-5322100, US-A-4610284 (utilisé pour limiter la revendication 1), EP-A-0636505, US-A-5111858, EP-A-0437053, EP-A-0464420 et EP-A-0581632, incluant diverses réalisations et perfectionnements essentiellement relatifs aux moyens anti-reflux et de sécurité pour éviter des pertes de combustible et de vapeurs.

Jusqu'à présent, lesdits tubes s'obtenaient en matériau thermoplastique en général par soufflage. En tenant compte du fait de ce que leur extrémité inférieure doit s'accoupler par emboîtement hermétique à l'intérieur de l'ouverture de remplissage du réservoir, ceci exigeait que la surface de ladite portion soit complètement lisse et son diamètre très précis. Comme ceci ne peut pas être obtenu par la technique de soufflage, dans l'état de la technique il a été réalisé une réduction du diamètre ou un amincissement du tube, en pratiquant sur ladite portion extrême une mécanisation de précision suivie d'une opération d'élimination des bavures, copeaux, etc. et une propreté finale. En outre, de telles tâches exigent un temps de réalisation considérable et une minutieuse propreté, avec le risque que quelques copeaux rémanents accèdent à l'intérieur du réservoir pouvant affecter défavorablement la pompe à combustible.

Le présent procédé se propose de résoudre lesdits inconvénients en réalisant ledit tube de remplissage à partir d'une première pièce de grande longueur et de développement sinueux, obtenue par la technique du soufflage, laquelle maintient solidairement des conduits pour l'aération et la dégazéification dudit réservoir, à l'extrémité inférieure de laquelle se lie, moyennant une opération de soudage, par exemple par plaque chauffante, une deuxième pièce, moulée, formée de la partie destinée à s'accoupler, par ajustement, à l'orifice de remplissage du réservoir, ladite partie ayant une surface externe complètement lisse et un diamètre très précis.

C'est à dire, conformément à l'invention, le corps tubulaire, qui intègre le tube de remplissage, se fabrique à partir de deux pièces en matériau thermoplastique, tel du polyéthylène, unies par soudage, une première pièce substantiellement équivalente à celles fabriquées actuellement, obtenue par soufflage, mais dépourvue de son extrémité inférieure qui se matérialise actuellement au moyen d'une deuxième pièce moulée par injection, unie à ladite première pièce par soudage thermique.

Ladite deuxième pièce consiste en un tube rectiligne, moulé par injection, pour lequel il a été prévu que le moule employé procure une portion de grande extension longitudinale de sa surface externe complètement lisse, dépourvue de bavures de moulage, qui reste limitée à une zone proche de l'extrémité qui se solidarise, par soudage, à ladite première pièce. En outre, cette deuxième pièce possède une portion proche de son extrémité libre de diamètre inférieur pour faciliter son insertion dans le réservoir. Ainsi à partir de l'obtention de la première pièce par soufflage et de la seconde par injection, avec une opération de soudage du corps tubulaire qui intègre le tube de remplissage, on est prêt à assurer l'accouplement hermétique avec l'entrée de remplissage du réservoir sans nécessiter des opérations ultérieures de mécanisation. Cette deuxième pièce inclue en outre, façonnées lors du moulage, deux appendices qui se terminent par des disques d'où émergent des buses pour être assemblées aux extrémités des tubes d'aération et de dégazéification provenant du réservoir, en soi connues.

Conformément à l'invention, la soudure desdites première et deuxième pièces constitutives du corps tubulaire qui intègre le tube de remplissage procure en outre l'union d'une extrémité de la deuxième avec l'extrémité inférieure de la première pièce et simultanément la fixation desdits disques avec les extrémités inférieures des conduits d'aération et de dégazéification solidaires de ladite première pièce, préalable à la coupe des extrémités inférieures de cette dernière et des conduits solidaires, avec un diamètre approprié, dans une phase ultérieure à son obtention par soufflage.

Les caractéristiques et les avantages de l'invention vont apparaître plus clairement à la lecture de la description détaillée qui suit d'un mode de réalisation préféré de l'invention donné à titre d'exemple non-limitatif et représenté aux dessins annexés.

Sur ces dessins:
- la figure 1 est une vue en perspective partielle montrant un secteur extrême inférieur du corps tubulaire intégrant le tube de remplissage sur le point d'être inséré dans l'ouverture de remplissage du réservoir (montré également en part);
- la figure 2 est une section longitudinale de l'extrémité inférieure (constitutive de la seconde pièce sus-mentionnée) du corps tubulaire intégrant le tube de remplissage, accouplé, en situation fonctionnelle, à l'entrée de remplissage dudit réservoir et la figure 2a montre une variante du clapet anti-reflux associé à ladite deuxième pièce;

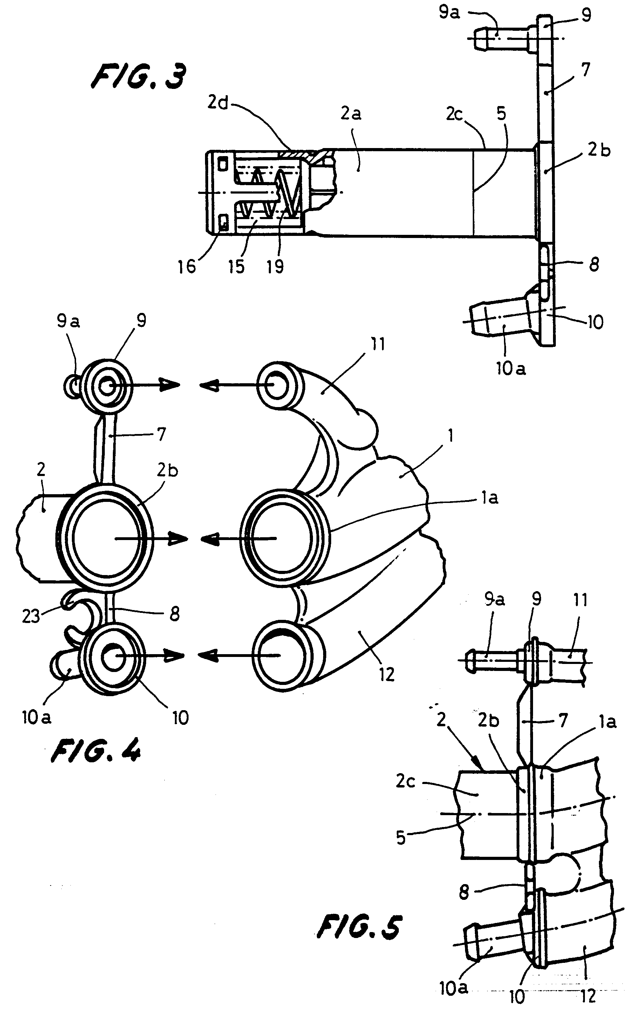

- la figure 3 est une vue en élévation latérale de la deuxième pièce obtenue par injection avec ses deux appendices terminés respectivement par des disques et de buses;
- la figure 4 représente la jonction, par soudure, de manière simultanée, d'une extrémité de la deuxième pièce et des disques qui terminent ses appendices latéraux, avec l'extrémité inférieure de la première pièce avec ses conduits d'aération et de dégazéification, respectivement;
- la figure 5 est une vue en élévation latérale de la jonction desdites deux pièces.

Conformément aux figures, le procédé objet de la présente invention consiste à fabriquer ledit corps tubulaire, intégrant le tube de remplissage, à partir de deux pièces en matériau thermoplastique, avantageusement en polyéthylène, comprenant une première pièce (1), obtenue par soufflage, de grande longueur et de développement sinueux, prévue pour s'adapter aux caractéristiques de la carcasse et éviter toute défaillance, avec une première extrémité ouverte (non représentée) qui communique avec l'atmosphère et fermée de manière étanche par un bouchon amovible, et une deuxième pièce (2), obtenue par moulage par injection, qui se solidarise à ladite première pièce par soudage par plaque chauffante, par son autre extrémité. Ladite deuxième pièce (2) possède une portion (2a) de grande longueur, de surface extérieure complètement lisse, dépourvue de bavures de moulage, prévue pour son adaptation en accouplement ajusté par emboîtement dans l'entrée de remplissage (4) de réservoir (3).

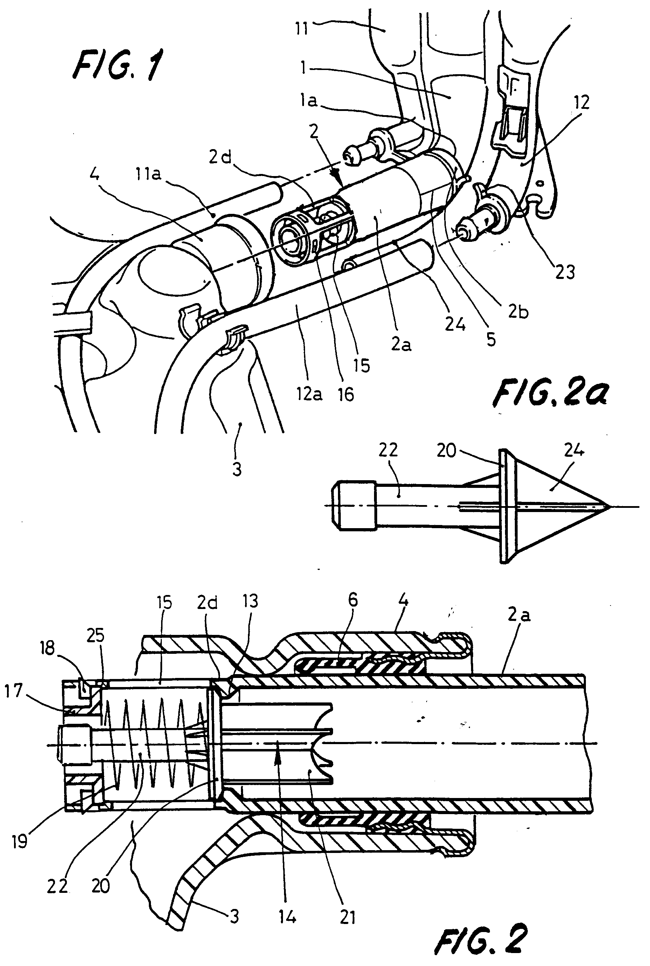

La pièce (2) consiste en un corps tubulaire avec une de ses extrémités (2b) évasée prévue pour s'unifier par soudage à l'extrémité (1a), distale du bouchon de fermeture, de ladite première pièce (1), la liaison des parts (1a) avec (2b) étant représentée à la figure 5. Sur cette dernière figure, apparaissent également les bavures superficielles (5) correspondant aux zones d'ouverture du moule d'injection pour la réalisation de ladite deuxième pièce (2), localisées exclusivement sur une première portion (2c), de courte longueur, jointive à l'extrémité (2b), qui se prolonge par la portion (2a) de grande longueur et de surface extérieure complètement lisse prévue pour se raccorder, par emboîtement, à l'entrée (4) du réservoir (3) et entourée d'un moyen du type joint (6) coaxial (voir figure 2).

De deux points diamétralement opposés de l'extrémité (2b) évasée de la pièce (2), sortent vers l'extérieur deux bras (7, 8) de longueur bien définie se terminant par des disques (9, 10) desquels sortent des buses (9a, 10a) prévues pour le raccordement des extrémités des tubes (11a, 12a) d'aération et de dégazéification qui viennent du réservoir (3). Lesdits disques (9, 10) étant prévus pour leurs fixation aux extrémités des conduits (11, 12) d'aération et de dégazéification appartenant à la pièce (1) du corps tubulaire. Sur l'un des appendices (8) a été prévue une expansion qui forme un collier (23) pour la fixation d'un autre tube (24) de dégazéification du réservoir.

Comme on peut le voir à la figure 2, dans le procédé de moulage de la pièce (2), il existe à l'intérieur une saillie annulaire (13) constituant un siège en biseau, pour un clapet anti-retour (14), logé dans une portion (2d) en forme de cage qui termine ladite portion (2a), ladite portion (2d) étant de diamètre plus petit et comportant une première série de lumières (15), équidistantes, et une seconde série d'orifices (16), beaucoup plus petits, pour la fixation d'une bague (17) dotée d'onglets élastiques (18) qui pénètrent dans lesdits orifices (16) pour la rétention d'un élément élastique comme par exemple en ressort hélicoïdal (19) de charge réduite.

Dans une réalisation préférée montrée à la figure 2, ledit clapet (14) comprend un obturateur discal (20) duquel sortent, par l'une de ses faces, des ailettes (21) en croix, de configurations diverses (rectangulaire, triangulaire comme sur la figure 2a, etc.), servant de guide au travers de la saillie annulaire (13), et par l'autre face, un axe (22) central qui s'étend au travers de ladite bague (17) laquelle repose sur une saillie intérieure (25).

Bien entendu, l'invention n'est pas limitée aux modes de réalisation décrits et représentés pour lesquels on pourra prévoir d'autres variantes dans, essentiellement, la nature des matériaux employés, les formes et les dimensions des diverses pièces constitutives, et l'étendre à d'autres applications, sans pour cela sortir du cadre de l'invention.

## Revendications

1. Procédé de fabrication de tubes de remplissage de réservoirs (3) à combustible du type comportant un corps tubulaire (1, 2) avec une extrémité supérieure (1) qui communique avec l'atmosphère et sur laquelle est accouplée une pièce d'entrée qui intègre un bouchon étanche amovible et des éléments valvulaires, et une extrémité inférieure (2), dotée de moyens à clapet anti-reflux (20), accouplée par emboîtement à la bouche d'entrée (4) du réservoir (3) dont le corps tubulaire (1, 2) peut incorporer, solidaires, des conduits (11, 12) pour l'aération et la dégazéification dudit réservoir;
**caractérisé** en ce que ledit corps tubulaire est réalisé à partir de deux pièces en matériau thermoplastique, tel du polyéthylène: une première pièce (1) de grande longueur et de développement sinueux, obtenue par soufflage, qui inclue ladite extrémité supérieure, et une deuxième pièce (2), qui comprend ladite extrémité inférieure, obtenue par moulage, desdites deux pièces (1) et (2) étant solidarisée par soudage; et en ce que ladite deuxième pièce (2) moulée possède une portion (2a) de grande longueur, de surface externe complètement lisse, dépourvue de bavures de moulage.

2. Procédé, selon la revendication 1, caractérisé en ce que ladite première pièce (1) comporte en outre, solidaires, lesdits conduits (11, 12) d'aération et de dégazéification du réservoir (3).

3. Procédé, selon la revendication 1, caractérisé en ce que la deuxième pièce (2) est obtenue par moulage par injection et forme un tube rectiligne avec une extrémité (2b) destinée à s'unir à la première pièce (1), évasée, de laquelle sortent, vers l'extérieur, de deux points diamétralement opposés, obtenus dans la même opération moulage, deux appendices (7, 8) se terminant par des disques (9, 10) desquels sortent des buses (9a, 10a) pour se raccorder aux extrémités des tubes (11a, 12a) d'aération et de dégazéification du réservoir.

4. Procédé, selon la revendication 3, caractérisé en ce que, sur l'un des appendices (8), il a été prévu en outre la réalisation d'une expansion qui forme un collier (23) pour la fixation d'un autre tube (24) de dégazéification du réservoir.

5. Procédé, selon la revendication 3, caractérisé en ce que la réunion desdites première (1) et deuxième (2) pièces constitutives du corps tubulaire intégrant le tube de remplissage, se fait par soudage par plaque chauffante de ladite extrémité évasée (2b), de la deuxième pièce (2), avec l'extrémité inférieure (1a) de la pièce (1) simultanément avec le soudage desdits deux disques (9) et (10) aux extrémités inférieures des deux conduits (11, 12) solidaires de ladite première pièce (1), avec une phase préalable de coupe de l'extrémité inférieure de la pièce (1) et des conduits solidaires (11, 12) avec un diamètre approprié, postérieurement à son obtention par soufflage.

6. Procédé, selon la revendication 3, caractérisé en ce que l'opération de moulage de ladite deuxième pièce (2) se réalise de telle manière que les bavures superficielles (5), correspondant à la zone d'ouverture de moule d'injection, sont localisées exclusivement sur une portion (2c), de courte longueur, adjacente à ladite extrémité évasée (2b) qui se continue par une portion de plus grande longueur (2a) et de surface externe complètement lisse.

7. Procédé, selon la revendication 3, caractérisé en ce que ladite deuxième pièce (2), obtenue par moulage, forme intérieurement une saillie annulaire constituant un siège (13) pour le clapet anti-retour (14) apte à se déplacer dans unes portion (2d), en forme de cage, distale de l'extrémité évasée (2b), de plus petit diamètre, qui comporte une première série de lumières (15), équidistantes, et une seconde série d'orifices (16), plus petits pour la fixation d'un élément de rétention (17) d'un élément élastique (19), avec un échelon intérieur (25) qui définit un siège pour ledit élément de rétention (17).

8. Procédé, selon la revendication 7, caractérisé en ce que, dans l'intérieur de ladite cage, se loge un organe du type clapet (14) comprenant un obturateur (20) discal duquel partent, par une de ses faces, des ailettes (21), en croix, servant de guide et qui se placent à l'intérieur dudit siège annulaire (13), et, par son autre face, un axe central (22) qui se prolonge à l'intérieur de l'élément de rétention (17), et en ce que ledit élément de rétention, constitué par une bague, se fixe à l'extrémité de ladite cage par des onglets (18) élastiques périphériques qui s'insèrent dans la série d'orifices (16), ledit axe (22) étant entouré par un ressort hélicoïdal (19) de charge réduite.

## Claims

1. Process for producing hoses to fill fuel tanks (3) of the type comprising a tubular body (1,2) having a top end (1) which communicates with the atmosphere and on which is coupled an inlet part including a movable tight plug and valvular elements, and a lower end (2), provided with nonreturn flap valve means (20), coupled by socketing it to the tank (3) inlet mouthpiece (4), said tubular body (1,2) may incorporate, integral, ducts (11,12) for ventilating and degasifying said tank;
characterized in that said tubular body is made from two parts in thermoplastic material, such as polyethylene: a very long first part (1) and having a sinuous development obtained by blowing which includes said top end, and a second part (2), which includes said lower end, obtained by moulding, said two parts (1) and (2) being made integral by welding; and in that said second moulded part (2) possesses a very long portion (2a), having a completely smooth external surface, without moulding barb.

2. Process according to claim 1, characterized in that said first part (1) comprises in addition, integral, ventilating and degasifying ducts (11, 12) of said tank (3).

3. Process, according to claim 1, characterized in that the second part (2) is obtained by injection moulding and forms a rectilinear hose with an end (2b) designed to become attached to the flared first part (1), from which two diametrically opposed points outwardly start, obtained in the same moulding operation, two appendages (7,8) ending by disks (9, 10) which exit from nozzles (9a, 10a) to be linked to tank ventilating and degasifying hoses (11a, 12a) ends.

4. Process, according to claim 3, characterized in that , on one of the appendages (8), in addition, an extension has been provided which forms a collar (23) for fixing another tank degasifying hose (24).

5. Process, according to claim 3, characterized in that newly joining said first (1) and second (2) parts constituting the tubular body which integrates the filling hose, is made by welding with heating plate said flared end (2b), of the second part (2), with the lower end (1a) of the part (1) simultaneously with the welding of said two disks (9) and (10) to the lower ends of the two hoses (11,12) integral with said first part (1), with a prior step of cutting the part (1) lower end and integral ducts (11, 12) with a suitable diameter, further to their obtention by blowing.

6. Process, according to claim 3, characterized in that said second part (2) moulding operation is carried out so that superficial barbs (5) corresponding to the injection mould opening area are solely located on a short portion (2c), adjacent to said flared end (2b) which continues by a longer portion (2a) and having a completely smooth external surface.

7. Process, according to claim 3, characterized in that said second part (2), obtained by moulding, forms inside an annular protrusion which constitute a seat (13) for the nonreturn valve (14) adapted to move in a cage-shaped portion (2d), distal from the flared end (2b), having a smaller diameter, which comprises a first series of equidistant holes (15), and a second series of smaller holes (16), for fixing an elastic element (19) retaining element (17), having an interior step (25) which determines a seat for said retaining element (17).

8. Process, according to claim 7, characterized in that, within said cage, a flap valve-like organ (14) comprising a discal obturator (20) is housed from which are starting, from one of its faces, cross wings (21) which serve as guide and which is located inside said annular seat (13), and by its other face, a central shaft (22) which extend inside the retaining element (17), and in that said retaining element, constituted by a ring, is fixed at the end of said cage by elastic peripheral stubs (18) which are inserted in a series of holes (16), said shaft (22) being surrounded by a light loaded helical spring (19) load.

## Patentansprüche

1. Verfahren zur Herstellung von Rohren zum Füllen von Brennstoff- Vorratsbehältern (3), die einen rohrförmigen Körper (1, 2) mit einem oberen Ende (1) aufweisen, das mit der Atmosphäre in Verbindung steht und an das ein Eingangsstück angeschlossen ist, das mit einem abnehmbaren dichten Verschluß und Ventilelementen eine Einheit bildet, und ein unteres Ende (2) beinhalten, das mit Rückschlagventilmitteln (20) ausgestattet ist und über einen Flansch an die Eintrittsöffnung (4) des Vorratsbehälters (3) angeschlossen ist, dessen rohrförmiger Körper (1, 2) mit demselben fest verbundene Leitungen (11, 12) zur Belüftung und Entgasung des Vorratsbehälters aufweisen kann;
dadurch gekennzeichnet, daß der rohrförmige Körper aus zwei Teilen aus Thermoplastmaterial, wie z.B. Polyäthylen, gefertigt wird, und zwar: ein erstes Teil (1) großer Länge und bogenförmigem Verlauf, das durch Blasformen hergestellt wurde und das obere Ende umfaßt, und ein zweites Teil (2), das das untere Ende (2) umfaßt und durch Formen hergestellt wurde, wobei die zwei Teile (1) und (2) durch Schweißen zu einem einzigen Teil verbunden wurden, und daß das zweite geformte Teil (2) einen Abschnitt (2a) großer Länge besitzt, dessen Außenfläche vollkommen glatt und frei von Formgrat ist.

2. Verfahren nach Anspruch 1, dadurch gekennzeichnet, daß das erste Teil (1) außerdem die mit demselben fest verbundenen Leitungen (11, 12) zur Belüftung und Entgasung des Vorratsbehälters (3) beinhaltet.

3. Verfahren nach Anspruch 1, dadurch gekennzeichnet, daß das zweite Teil (2) durch Spritzgießen hergestellt wird und ein geradliniges Rohr mit einem Ende (2b) bildet, das zur Verbindung mit dem konisch erweiterten ersten Teil (1) vorgesehen ist, aus dem von zwei diametral entgegengesetzten Stellen zwei beim gleichen Formungsvorgang gebildete Verlängerungsstücke (7, 8) nach außen verlaufen und an Scheiben (9, 10) enden, von denen Anschlußleitungen (9a, 10a) ausgehen, die an die Enden der Rohre (11a, 12a) zur Belüfutng und Entgasung des Vorratsbehälters angeschlossen werden.

4. Verfahren nach Anspruch 3, dadurch gekennzeichnet, daß an einem der Verlängerungsstücke (8) außerdem vorgesehen ist, eine Verbreiterung vorzunehmen, die einen Ring (23) zur Befestigung eines weiteren Rohrs (24) zur Belüftung und Entgasung des Vorratsbehälters bildet.

5. Verfahren nach Anspruch 3, dadurch gekennzeichnet, daß die Verbindung des ersten Teils (1) mit dem zweiten Teil (2), des rohrförmigen Körpers der mit dem Füllrohr eine Einheit bildet, durch Verschweißen mittels einer Heizplatte des konisch erweiterten Endes (2b) des zweiten Teils (2) mit dem unteren Ende (1a) des Teils (1) bei gleichzeitiger Verschweißung der beiden Scheiben (9) und (10) mit den unteren Enden der mit dem ersten Teil (1) fest verbundenen zwei Leitungen (11, 12) stattfindet, wobei zuvor das untere Ende des Teils (1) und die damit fest verbundenen Leitungen (11, 12) im Anschluß an deren Herstellung durch Blasformen auf einen geeigneten Durchmesser zurechtgeschnitten wurden.

6. Verfahren nach Anspruch 3, dadurch gekennzeichnet, daß der Formungsvorgang des zweiten Teils (2) so erfolgt, daß der Oberflächengrat (5), der dem Öffnungsbereich der Spritzgießform entspricht, örtlich ausschließlich auf einen Abschnitt (2c) geringer Länge begrenzt ist, der an das konisch erweiterte Ende (2b) angrenzt, dessen Fortsetzung in einem Abschnitt größerer Länge (2a) und vollkommen glatter Außenfläche besteht.

7. Verfahren nach Anspruch 3, dadurch gekennzeichnet, daß das zweite durch Formen hergestellte Teil (2) im Innern einen ringförmigen Vorsprung bildet, der einen Sitz (13) für das Rückschlagventil (14) darstellt, das in einem Bereich (2d) verschiebbar ist, der die Form eines Gehäuses aufweist, sich fern des konisch erweiterten Endes (2b) befindet und einen kleineren Durchmesser aufweist, wobei dieser Bereich (2d) eine erste Reihe von Luftschlitzen (15) mit gleichem Abstand und eine zweite Reihe von kleineren Öffnungen (16) zur Befestigung eines Halteglieds (17) für ein elastisches Element (19) mit einer Innenabstufung (25) aufweist, die einen Sitz für das Halteglied (17) definiert.

8. Verfahren nach Anspruch 7, dadurch gekennzeichnet, daß im Innern des Gehäuses ein Organ vom Typ Sperrventil (14) untergebracht ist, das eine scheibenförmige Verschlußdichtung (20) aufweist, von dem an einer seiner Flächen Kreuzflügel (21) ausgehen, die als Führung dienen und im Innern des Ringsitzes (13) aufliegen, während von seiner anderen Seite ein Hauptschaft (22) ausgeht, der bis ins Innere des Halteglieds (17) reicht, und daß das aus einem Ring bestehende Halteglied am Ende des Gehäuses mittels am Rand angeordneter elastischer Haltefedern (18) befestigt wird, die in eine Reihe von Öffnungen (16) eingreifen, wobei der Schaft (22) von einer zylindrischen Schraubenfeder (19) mit verringerter Belastung umgeben ist.
